# EUROPÄISCHE PATENTSCHRIFT

(11) **EP 3 807 700 B1**
(45) Veröffentlichungstag und Bekanntmachung des Hinweises auf die Patenterteilung: **29.10.2025**
(21) Anmeldenummer: 19731670.6
(22) Anmeldetag: 13.06.2019
(51) Int. Cl.: G02B 27/01, F21V 8/00, B60J 1/02

(54) **LICHTWELLENLEITER MIT SCHUTZ VOR KONDENSWASSER FÜR EIN GERÄT ZUM GENERIEREN EINES VIRTUELLEN BILDES**
OPTICAL WAVEGUIDE WITH PROTECTION AGAINST CONDENSATION WATER FOR A DEVICE FOR GENERATING A VIRTUAL IMAGE
GUIDE OPTIQUE DOTÉ D'UNE PROTECTION CONTRE L'EAU DE CONDENSATION DESTINÉ À UN APPAREIL DE GÉNÉRATION D'UNE IMAGE VIRTUELLE

(30) Priorität: 15.06.2018 DE 102018209617
(43) Veröffentlichungstag der Anmeldung: 21.04.2021
(73) Patentinhaber: Continental Automotive Technologies GmbH, 30175 Hannover (DE)
(72) Erfinder: KOLLOCH, Ulrich, 65824 Schwalbach a. Ts. (DE); SCHÖPPER, Markus, 65824 Schwalbach a. Ts. (DE); KERN, Thorsten Alexander, 65936 Schwalbach a. Ts. (DE)
(74) Vertreter: Aumovio Corporation
(86) Internationale Anmeldenummer: PCT/EP2019/065518
(87) Internationale Veröffentlichungsnummer: WO 2019/238829

(56) Entgegenhaltungen:
- EP-A1- 2 784 577
- JP-A- 2010 080 345
- US-A1- 2018 052 501
- US-A1- 2018 059 462

## Beschreibung

Die vorliegende Erfindung betrifft einen Lichtwellenleiter für ein Gerät zum Generieren eines virtuellen Bildes, insbesondere einen Lichtwellenleiter, der Schutz vor der Bildung von Kondenswasser bietet.

Unter einem Head-Up-Display, auch als HUD bezeichnet, wird ein Anzeigesystem verstanden, bei dem der Betrachter seine Blickrichtung beibehalten kann, da die darzustellenden Inhalte in sein Sichtfeld eingeblendet werden. Während derartige Systeme aufgrund ihrer Komplexität und Kosten ursprünglich vorwiegend im Bereich der Luftfahrt Verwendung fanden, werden sie inzwischen auch im Automobilbereich in Großserie verbaut.

Head-Up-Displays bestehen im Allgemeinen aus einem Bildgenerator, einer Optikeinheit und einer Spiegeleinheit. Der Bildgenerator erzeugt das Bild. Die Optikeinheit leitet das Bild auf die Spiegeleinheit. Der Bildgenerator wird oft auch als bildgebende Einheit oder PGU (Picture Generating Unit) bezeichnet. Die Spiegeleinheit ist eine teilweise spiegelnde, lichtdurchlässige Scheibe. Der Betrachter sieht also die vom Bildgenerator dargestellten Inhalte als virtuelles Bild und gleichzeitig die reale Welt hinter der Scheibe. Als Spiegeleinheit dient im Automobilbereich oftmals die Windschutzscheibe, deren gekrümmte Form bei der Darstellung berücksichtigt werden muss. Durch das Zusammenwirken von Optikeinheit und Spiegeleinheit ist das virtuelle Bild eine vergrößerte Darstellung des vom Bildgenerator erzeugten Bildes.

Der Betrachter kann das virtuelle Bild nur aus der Position der sogenannten Eyebox betrachten. Als Eyebox wird ein Bereich bezeichnet, dessen Höhe und Breite einem theoretischen Sichtfenster entspricht. So lange sich ein Auge des Betrachters innerhalb der Eyebox befindet, sind alle Elemente des virtuellen Bildes für das Auge sichtbar. Befindet sich das Auge hingegen außerhalb der Eyebox, so ist das virtuelle Bild für den Betrachter nur noch teilweise oder gar nicht sichtbar. Je größer die Eyebox ist, desto weniger eingeschränkt ist der Betrachter somit bei der Wahl seiner Sitzposition.

Die Größe der Eyebox herkömmlicher Head-Up-Displays wird durch die Größe der Optikeinheit begrenzt. Ein Ansatz zur Vergrößerung der Eyebox besteht darin, das von der bildgebenden Einheit kommende Licht in einen Lichtwellenleiter einzukoppeln. Das in den Lichtwellenleiter eingekoppelte Licht, das die Bildinformation trägt, wird an dessen Grenzflächen totalreflektiert und wird somit innerhalb des Lichtwellenleiters geleitet. Zusätzlich wird an einer Vielzahl von Positionen entlang der Ausbreitungsrichtung jeweils ein Teil des Lichts ausgekoppelt, so dass die Bildinformation über die Fläche des Lichtwellenleiters verteilt ausgegeben wird. Durch den Lichtwellenleiter erfolgt auf diese Weise eine Aufweitung der Austrittspupille. Die effektive Austrittspupille setzt sich hier aus Bildern der Apertur des Bilderzeugungssystems zusammen.

Vor diesem Hintergrund beschreibt die US 2016/0124223 A1 eine Anzeigevorrichtung für virtuelle Bilder. Die Anzeigevorrichtung umfasst einen Lichtwellenleiter, der bewirkt, dass von einer bildgebenden Einheit kommendes Licht, das durch eine erste Lichteinfallsfläche einfällt, wiederholt einer internen Reflexion unterzogen wird, um sich in einer ersten Richtung von der ersten Lichteinfallsfläche weg zu bewegen. Der Lichtwellenleiter bewirkt zudem, dass ein Teil des im Lichtwellenleiter geführten Lichts durch Bereiche einer ersten Lichtaustrittsfläche, die sich in der ersten Richtung erstreckt, nach außen austritt. Die Anzeigevorrichtung umfasst weiterhin ein erstes lichteinfallseitiges Beugungsgitter, das auftreffendes Licht beugt, um zu bewirken, dass das gebeugte Licht in den Lichtwellenleiter eintritt, und ein erstes lichtausfallendes Beugungsgitter, das vom Lichtwellenleiter einfallendes Licht beugt.

Der in der US 2016/0124223 A1 genutzte Lichtwellenleiter ist auf eine Lichtwellenlänge optimiert. Soll ein farbiges virtuelles Bild dargestellt werden, sind zwei oder mehr parallel zueinander angeordnete Teillichtwellenleiter vorzusehen, die jeweils wellenlängenoptimiert sind. Damit das Licht innerhalb der Teillichtwellenleiter mittels totaler innerer Reflexion propagieren kann, müssen Luftspalte zwischen den Teillichtwellenleitern realisiert werden. Allerdings kann sich in dem zwischen den Teillichtwellenleitern befindlichen Raum feuchte Luft befinden, die im Falle eines entsprechenden Temperaturwechsels an den Oberflächen kondensiert. Ebenso kann Staub in die Zwischenräume eindringen. Kondenswasser und Staub haben einen negativen Einfluss auf die lichtwellenleitenden Eigenschaften der Teillichtwellenleiter und können zu Bildfehlern führen.

US 2018/0052501 A1 beschreibt ein thermisches Überwachungs- und Dissipationssystem zur Verwendung mit einem Head-Mounted Display. Das Head-Mounted Display umfasst einen Lichtwellenleiter mit mehreren an unterschiedliche Wellenlängen angepassten flächigen Teillichtwellenleitern, die parallel zueinander und voneinander beabstandet angeordnet sind. Zwischen den Teillichtwellenleitern befindet sich jeweils eine Luftschicht.

EP 2 784 577 A1 beschreibt ein Head-Up-Display mit einem Projektor. Der Projektor umfasst ein äußeres Gehäuse, in dem die Komponenten des Projektors angeordnet sind. Im äußeren Gehäuse ist unter anderem ein luftdichtes inneres Gehäuse angeordnet, in dem sich optische Komponenten und Laserdioden des Projektors befinden. Der Luftdruck im inneren Gehäuse ist größer als der Luftdruck im äußeren Gehäuse.

US 2018/0059462 A1 beschreibt eine Anzeigevorrichtung mit einem Display, einem funktionellen Substrat, das dem Display gegenüberliegt und mit diesem durch einen Luftraum verbunden ist, und, an peripheren Grenzen auf den gegenüberliegenden Oberflächen des Displays und des funktionellen Substrats, einem ersten Harz, das den Abstand zwischen dem Display und dem funktionellen Substrat aufrechterhält, und einem zweiten Harz, das das Display und das funktionelle Substrat aneinanderklebt.

JP 2010-080345 A beschreibt eine Anzeigevorrichtung mit einem Array-Substrat mit einem selbstleuchtenden Element in einem Anzeigebereich, einem Dichtungssubstrat, das gegenüber dem selbstleuchtenden Element des Array-Substrats angeordnet ist, und einem Dichtungsmaterial, das rahmenförmig so angeordnet ist, dass es den Anzeigebereich umgibt und das Array-Substrat und das Dichtungssubstrat verklebt. Der Druck in einem Innenraum zwischen dem Array-Substrat und dem Dichtungssubstrat ist höher als der Atmosphärendruck.

Es ist eine Aufgabe der vorliegenden Erfindung, einen verbesserten Aufbau eines Geräts zum Generieren eines virtuellen Bildes vorzuschlagen.

Diese Aufgabe wird durch einen Lichtwellenleiter mit den Merkmalen des Anspruchs 1 sowie durch ein Gerät mit den Merkmalen des Anspruchs 5 gelöst. Bevorzugte Ausgestaltungen der Erfindung sind Gegenstand der abhängigen Ansprüche.

Gemäß einem ersten Aspekt der Erfindung weist ein Lichtwellenleiter zwei oder mehr an unterschiedliche Wellenlängen angepasste flächige Teillichtwellenleiter auf, die mittels eines Befestigungselements untereinander befestigt und parallel zueinander und voneinander beabstandet angeordnet sind, wobei das Befestigungselement Dichtungen aufweist, die die Teillichtwellenleiter am Rand ihrer parallelen Begrenzungsflächen untereinander gasdicht verschließen, und Dichtungen, die den obersten und den untersten Teillichtwellenleiter gegen die Umwelt gasdicht verschließen, und wobei die Zwischenräume zwischen den Teillichtwellenleitern mit einem trockenen Schutzgas gefüllt sind, das unter Überdruck steht. Dabei liegen die Dichtungen zwischen jeweils einem Paar von Teillichtwellenleitern.

Gemäß einem weiteren Aspekt der Erfindung weist ein Gerät zum Generieren eines virtuellen Bildes auf:
- eine bildgebende Einheit zum Erzeugen eines Bildes; und
- einen erfindungsgemäßen Lichtwellenleiter zum Aufweiten einer Austrittspupille.

Ein erfindungsgemäßer flächiger Lichtwellenleiter weist zumindest zwei Teillichtwellenleiter auf, die für unterschiedliche Wellenlängen optimiert sind. Die Teillichtwellenleiter sind mittels eines Befestigungselements untereinander befestigt und parallel zueinander mit einem Abstand voneinander angeordnet. Am Rand ihrer parallelen Flächen sind sie durch Dichtungen des Befestigungselements gasdicht verschlossen. In dem zwischen den parallelen Flächen befindlichen gasdicht verschlossenen Raum befindet sich ein trockenes Schutzgas, z.B. Argon, Xenon oder Stickstoff. Der beschriebene Aufbau des Lichtwellenleiters hat den Vorteil, dass er einen Schutz vor der Bildung von Kondenswasser bietet. Zudem wird der Eintritt von Staub oder anderen Schmutzpartikeln verhindert, die sich andernfalls auf den Oberflächen der Teillichtwellenleiter ablagern könnten.

Erfindungsgemäß sind die Dichtungen zum gasdichten Verschließen der Zwischenräume derart ausgestaltet, dass sie die Teillichtwellenleiter stützen. Auf diese Weise können Schwingungen der Teillichtwellenleiter noch weiter reduziert werden.

Erfindungsgemäß steht das Schutzgas unter Überdruck. Die einzelnen Teillichtwellenleiter weisen an sich nur eine geringe mechanische Stabilität auf. Im Falle einer äußeren Anregung können die Teillichtwellenleiter zu schwingen beginnen und durch einen Kontakt zum jeweils benachbarten Teillichtwellenleiter oder einem diese umgebenden Gehäuse beschädigt werden. Durch den Überdruck kann die Stabilität des Lichtwellenleiters erhöht werden, da Schwingungen der einzelnen Teillichtwellenleiter gedämpft werden. Dadurch können die Abstände zwischen den Teillichtwellenleitern verringert werden, was sich positiv auf die Abbildungsqualität des Systems auswirkt und gleichzeitig den benötigten Bauraum reduziert.

Gemäß einem Aspekt der Erfindung weisen die Teillichtwellenleiter jeweils zumindest ein Hologramm auf, wobei in unterschiedlichen Teillichtwellenleitern befindliche Hologramme in ihrer räumlichen Anordnung zueinander ausgerichtet sind. Bei dem zumindest einen Hologramm kann es sich beispielsweise um ein Einkoppelhologramm, ein Auskoppelhologramm oder ein Falthologramm handeln. Durch die zueinander ausgerichtete räumliche Anordnung der Holgramme in den unterschiedlichen Teillichtwellenleitern ist gewährleistet, dass die in den unterschiedlichen Teillichtwellenleitern transportierte monochrome Bildinformation ortskorrekt zu einem farbigen Gesamtbild zusammengesetzt wird.

Gemäß einem Aspekt der Erfindung sind die Hologramme an eine durch den Überdruck hervorgerufene Verformung der Teillichtwellenleiter vorangepasst. Beispielsweise sind die Hologramme zwar in einer Ebene der Teillichtwellenleiter angeordnet, ihre optischen Eigenschaften berücksichtigen aber schon die von ihnen nach Ausbildung des Überdrucks eingenommene räumliche Lage bzw. die von den Teillichtwellenleitern angenommene Form.

Gemäß einem Aspekt der Erfindung weist das Schutzgas für die unterschiedlichen Wellenlängen Brechungsindices auf, die sich von den Brechungsindices der Teillichtwellenleiter für die jeweiligen Wellenlängen unterscheiden. Durch den resultierenden Sprung der Brechungsindices an den Grenzflächen der Teillichtwellenleiter ist eine sichere Propagation der Bildinformation durch totale innere Reflexion gewährleistet.

Gemäß einem Aspekt der Erfindung sind die Abstände zwischen den Teillichtwellenleitern mindestens so groß, dass die Teillichtwellenleiter bei Schwingungsanregung nicht in Kontakt geraten. Auf diese Weise ist gewährleistet, dass die Teillichtwellenleiter nicht beschädigt werden, falls es trotz des Überdrucks oder der Stabilisierung durch die Dichtungen durch eine äußere Anregung dennoch zu Schwingungen der Teillichtwellenleiter kommt.

Vorzugsweise wird ein erfindungsgemäßes Gerät in einem Fortbewegungsmittel eingesetzt, um ein virtuelles Bild für einen Bediener des Fortbewegungsmittels zu erzeugen. Bei dem Fortbewegungsmittel kann es sich beispielsweise um ein Kraftfahrzeug oder ein Luftfahrzeug handeln. Selbstverständlich kann die erfindungsgemäße Lösung auch in anderen Umgebungen oder für andere Anwendungen genutzt werden, z.B. in Lastkraftwagen, in der Bahntechnik und im ÖPNV, bei Kranen und Baumaschinen, etc.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Head-Up-Display gemäß dem Stand der Technik für ein Kraftfahrzeug;
- Fig. 2: zeigt einen Lichtwellenleiter mit zweidimensionaler Vergrößerung;
- Fig. 3: zeigt schematisch ein Head-Up-Display mit Lichtwellenleiter;
- Fig. 4: zeigt schematisch ein Head-Up-Display mit Lichtwellenleiter in einem Kraftfahrzeug; und
- Fig. 5: zeigt schematisch eine Ausführungsform eines erfindungsgemäßen Lichtwellenleiters.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

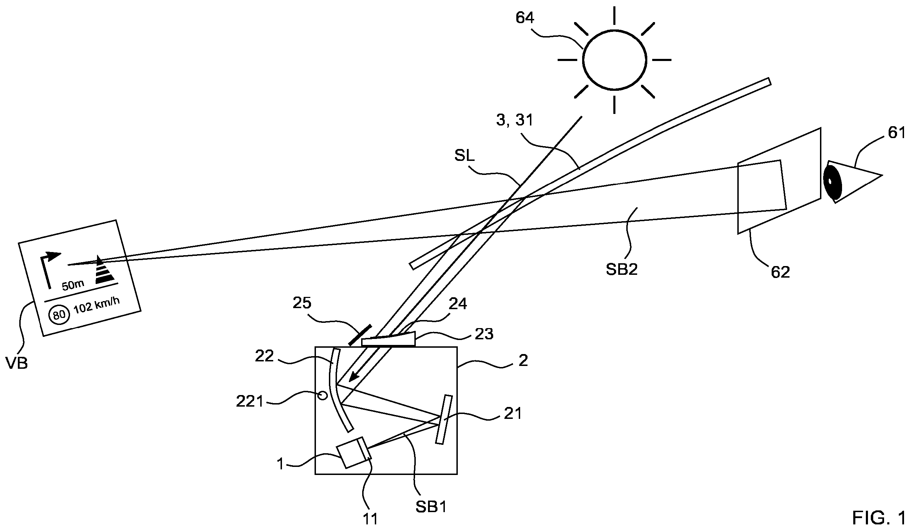

Zunächst soll anhand der Figuren 1 bis 4 der Grundgedanke eines Head-Up-Displays mit Lichtwellenleiter dargelegt werden.

Fig. 1 zeigt eine Prinzipskizze eines Head-Up-Displays gemäß dem Stand der Technik für ein Kraftfahrzeug. Das Head-Up-Display weist einen Bildgenerator 1, eine Optikeinheit 2 und eine Spiegeleinheit 3 auf. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3 reflektiert. Die Spiegeleinheit 3 ist hier als Windschutzscheibe 31 eines Kraftfahrzeugs dargestellt. Von dort gelangt das Strahlenbündel SB2 in Richtung eines Auges 61 eines Betrachters.

Der Betrachter sieht ein virtuelles Bild VB, welches sich außerhalb des Kraftfahrzeugs oberhalb der Motorhaube oder sogar vor dem Kraftfahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder gar nicht sichtbar. Je größer die Eyebox 62 ist, desto weniger eingeschränkt ist der Betrachter bei der Wahl seiner Sitzposition.

Die Krümmung des gekrümmten Spiegels 22 ist an die Krümmung der Windschutzscheibe 31 angepasst und sorgt dafür, dass die Bildverzeichnung über die gesamte Eyebox 62 stabil ist. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, dass der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie 24 oder eine Beschichtung, die einfallendes Sonnenlicht SL daran hindern soll, über die Spiegel 21, 22 auf das Anzeigeelement 11 zu gelangen. Dieses könnte sonst durch eine dabei auftretende Wärmeentwicklung vorübergehend oder auch dauerhaft geschädigt werden. Um dies zu verhindern, wird beispielsweise ein Infrarotanteil des Sonnenlichts SL mittels der optischen Folie 24 ausgefiltert. Ein Blendschutz 25 dient dazu, von vorne einfallendes Licht abzuschatten, sodass es nicht von der Abdeckung 23 in Richtung Windschutzscheibe 31 reflektiert wird, was eine Blendung des Betrachters hervorrufen könnte. Außer dem Sonnenlicht SL kann auch das Licht einer anderen Störlichtquelle 64 auf das Anzeigeelement 11 gelangen.

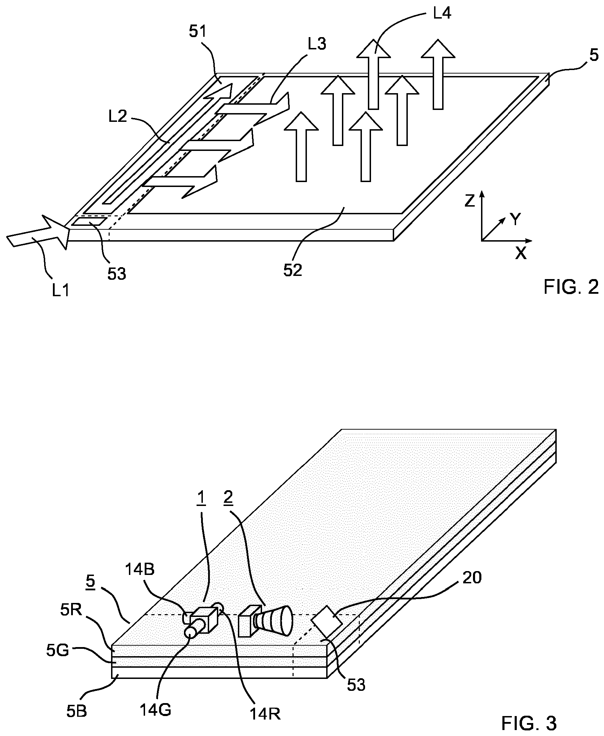

Fig. 2 zeigt in schematischer räumlicher Darstellung einen Lichtwellenleiter 5 mit zweidimensionaler Vergrößerung. Im unteren linken Bereich erkennt man ein Einkoppelhologramm 53, mittels dessen von einer nicht dargestellten bildgebenden Einheit kommendes Licht L1 in den Lichtwellenleiter 5 eingekoppelt wird. In diesem breitet es sich in der Zeichnung nach rechts oben aus, entsprechend dem Pfeil L2. In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5 befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X-Richtung, sodass das ursprüngliche einfallende Lichtbündel L1 als in zwei Dimensionen vergrößertes Lichtbündel L4 den Lichtwellenleiter 5 verlässt.

Fig. 3 zeigt in räumlicher Darstellung ein Head-Up-Display mit drei Lichtwellenleitern 5R, 5G, 5B, die übereinanderliegend angeordnet sind und für je eine Elementarfarbe Rot, Grün und Blau stehen. Sie bilden gemeinsam den Lichtwellenleiter 5. Die in dem Lichtwellenleiter 5 vorhandenen Hologramme 51, 52, 53 sind wellenlängenabhängig, sodass jeweils ein Lichtwellenleiter 5R, 5G, 5B für eine der Elementarfarben verwendet wird. Oberhalb des Lichtwellenleiters 5 sind ein Bildgenerator 1 und eine Optikeinheit 2 dargestellt. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Der Bildgenerator 1 weist drei Lichtquellen 14R, 14G, 14B für die drei Elementarfarben auf. Man erkennt, dass die gesamte dargestellte Einheit eine im Vergleich zu ihrer lichtabstrahlenden Fläche geringe Gesamtbauhöhe aufweist.

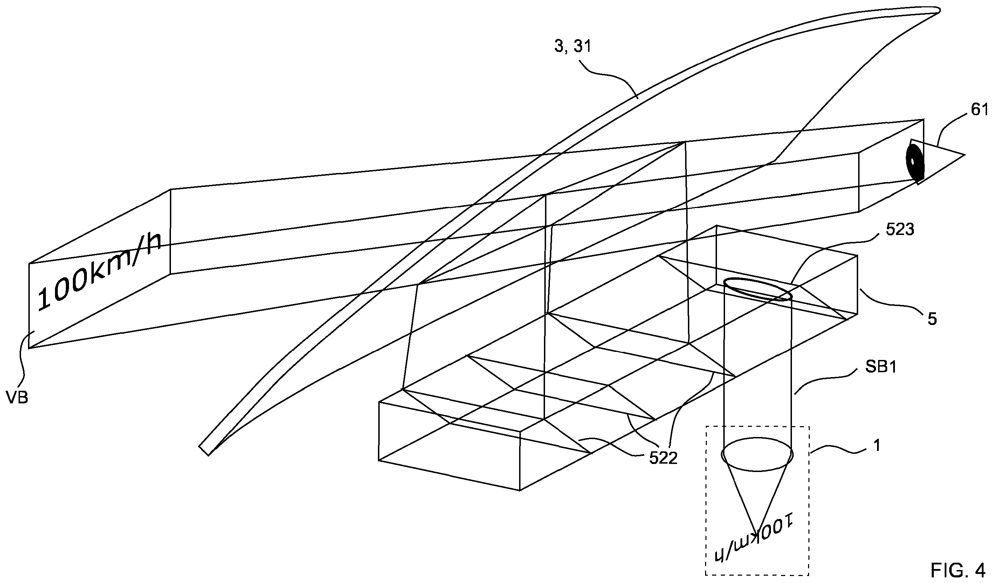

Fig. 4 zeigt ein Head-Up-Display in einem Kraftfahrzeug ähnlich zu Fig. 1, hier allerdings in räumlicher Darstellung und mit einem Lichtwellenleiter 5. Man erkennt den schematisch angedeuteten Bildgenerator 1, der ein paralleles Strahlenbündel SB1 erzeugt, welches mittels der Spiegelebene 523 in den Lichtwellenleiter 5 eingekoppelt wird. Die Optikeinheit ist der Einfachheit halber nicht dargestellt. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert. Der Betrachter sieht ein virtuelles Bild VB über der Motorhaube bzw. in noch weiterer Entfernung vor dem Kraftfahrzeug.

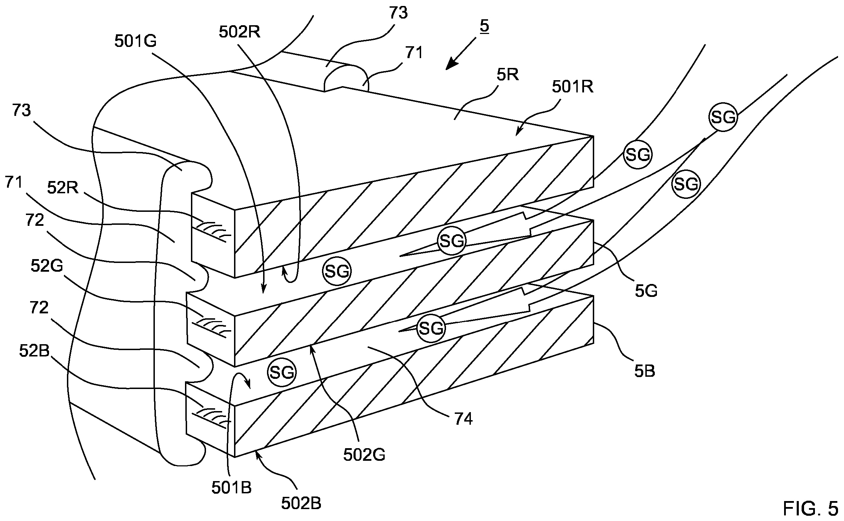

Fig. 5 zeigt schematisch eine Ausführungsform eines erfindungsgemäßen Lichtwellenleiters 5, der aus drei Teillichtwellenleitern 5R, 5G, 5B für die Farben Rot, Grün und Blau besteht. Dem Fachmann sind weitere Farbkombinationen bekannt, mit denen sich farbige Bilder realisieren lassen. Die Teillichtwellenleiter 5R, 5G, 5B sind auf die jeweilige Wellenlänge optimiert. Sie weisen jeweils eine obere Begrenzungsfläche 501R, 501G, 501B und eine untere Begrenzungsfläche 502R, 502G, 502B auf, die parallel zueinander ausgerichtet sind. Innerhalb der Teillichtwellenleiter 5R, 5G, 5B befinden sich Hologramme, von denen hier exemplarisch Auskoppelhologramme 52R, 52G, 52B gezeigt sind. Die Auskoppelhologramme 52R, 52G, 52B sind zueinander ausgerichtet, sodass sich die von ihnen ausgekoppelten Bilder unterschiedlicher Farbe möglichst exakt zu einem Farbbild ergänzen. Bereits kleine Fehler in der Ausrichtung können zu von einem Betrachter wahrnehmbaren Fehlern im Farbbild führen. Die Teillichtwellenleiter 5R, 5G, 5B sind mittels eines Befestigungselements 71 untereinander befestigt und parallel zueinander ausgerichtet. Das Befestigungselement 71 weist Dichtungen 72 auf, die die Teillichtwellenleiter 5R, 5G, 5B untereinander gasdicht abdichten, und Dichtungen 73, die den obersten und den untersten Lichtwellenleiter gegen die Umwelt gasdicht verschließen. Das Befestigungselement 71 und die Dichtungen 72, 73 sind hier geschnitten dargestellt. In den zwischen den Lichtwellenleitern 5R, 5G, 5B gebildeten gasdicht abgeschlossenen Räumen 74 ist ein trockenes Schutzgas SG eingefüllt.

Damit das Licht innerhalb der Teillichtwellenleiter 5R, 5G, 5B mittels totaler innerer Reflexion propagieren kann, muss ein ausreichender Unterschied im Brechungsindex des Materials der Teillichtwellenleiter 5R, 5G, 5B und des die Teillichtwellenleiter 5R, 5G, 5B umgebenden Mediums bestehen. Da ein festes Medium als Füllung des Spaltes aufgrund des erforderlichen Unterschiedes im Brechungsindex nicht in Frage kommt, wird der Zwischenraum 74 üblicherweise durch Luftspalte gebildet. Ein offener Zwischenraum lässt aber aufgrund seiner geringen Ausdehnung keinen vollständigen Luftaustausch zu. In einem offenen System mehrerer übereinander gelagerter Teillichtwellenleiter 5R, 5G, 5B besteht deshalb die Möglichkeit, dass sich zwischen den einzelnen Teillichtwellenleitern 5R, 5G, 5B mehr oder weniger feuchte Luft befindet, die bei fallender Temperatur an den Oberflächen 501R, 501G, 501B, 502R, 502G, 502B kondensiert und damit die Funktion beeinträchtigt. Eine korrekte Funktion wäre damit nicht mehr gegeben. Um die Entstehung von Kondenswasser zu vermeiden und damit ein einwandfreies Bild sicherzustellen, sind die Zwischenräume 74 erfindungsgemäß mit einem Schutzgas SG gefüllt, beispielsweise mit Argon, Xenon, Stickstoff o.ä.

Die einzelnen Teillichtwellenleiter 5R, 5G, 5B weisen an sich nur eine geringe mechanische Stabilität auf. Im Falle einer äußeren Anregung können die Teillichtwellenleiter 5R, 5G, 5B zu schwingen beginnen und durch einen Kontakt zum jeweils benachbarten Teillichtwellenleiter 5R, 5G, 5B oder einem diese umgebenden Gehäuse beschädigt werden. Die in Zusammenhang mit der Füllung erforderliche Abdichtung des Systems stützt dieses umlaufend, wodurch Schwingungen bereits teilweise gedämpft werden. Die Abdichtung bietet zusätzlich die Möglichkeit, dass das gesamte System mit einem Überdruck befüllt werden kann. Dadurch kann ebenfalls Schwingungen der einzelnen Teillichtwellenleiter 5R, 5G, 5B entgegengewirkt werden. Die Stützwirkung durch einen Überdruck P ist dabei direkt proportional zum Überdruck. Die durch den Überdruck auf einen Teillichtwellenleiter 5R, 5G, 5B wirkende Kraft ist F=P×A, wobei A die Fläche des Teillichtwellenleiters 5R, 5G, 5B ist. Demgegenüber ist die durch Schwingung auf einen Teillichtwellenleiter 5R, 5G, 5B wirkende Kraft F=m×a, wobei m die Masse des Teillichtwellenleiters 5R, 5G, 5B und a die auftretende Beschleunigung ist.

Aufgrund der gesteigerten Stabilität des Systems können die Abstände zwischen den Teillichtwellenleitern 5R, 5G, 5B reduziert werden, was sich positiv auf die optische Qualität des Systems und auch den benötigten Bauraum auswirkt. Dabei ist es sinnvoll, die Abstände mindestens so groß zu wählen, dass die Teillichtwellenleiter 5R ,5G, 5B nicht in Kontakt geraten, falls es trotz des Überdrucks oder der Stabilisierung durch die Dichtungen 72, 73 durch eine äußere Anregung dennoch zu einer Schwingungsanregung kommt.

### Bezugszeichenliste

- 1: Bildgenerator/Bildgebende Einheit
- 11: Anzeigeelement
- 14, 14R, 14G, 14B: Lichtquelle

- 2: Optikeinheit
- 20: Spiegel
- 21: Faltspiegel
- 22: Gekrümmter Spiegel
- 221: Lagerung
- 23: Transparente Abdeckung
- 24: Optische Folie
- 25: Blendschutz

- 3: Spiegeleinheit
- 31: Windschutzscheibe

- 5: Lichtwellenleiter
- 5R, 5G, 5B: Teillichtwellenleiter
- 501R, 501G, 501B: Obere Begrenzungsfläche
- 502R, 502G, 502B: Untere Begrenzungsfläche
- 51: Falthologramm
- 52, 52R 52G, 52B: Auskoppelhologramm
- 522: Spiegelebene
- 523: Spiegelebene
- 53: Einkoppelhologramm

- 61: Auge/ Betrachter
- 62: Eyebox
- 64: Störlichtquelle

- 71: Befestigungselement
- 72, 73: Dichtung
- 74: Gasdicht abgeschlossener Raum

- L1...L4: Licht
- SB1, SB2: Strahlenbündel
- SG: Schutzgas
- SL: Sonnenlicht
- VB: Virtuelles Bild

## Patentansprüche

1. Lichtwellenleiter (5) mit zwei oder mehr an unterschiedliche Wellenlängen angepassten flächigen Teillichtwellenleitern (5R, 5G, 5B), die mittels eines Befestigungselements (71) untereinander befestigt und parallel zueinander und voneinander beabstandet angeordnet sind, **dadurch gekennzeichnet, dass** das Befestigungselement (71) Dichtungen (72) aufweist, die zwischen jeweils einem Paar von Teillichtwellenleitern (5R, 5G, 5B) liegen und die Teillichtwellenleiter (5R, 5G, 5B) stützen sowie diese Teillichtwellenleiter (5R, 5G, 5B) am Rand ihrer parallelen Begrenzungsflächen (502R, 501G, 502G, 501B) untereinander gasdicht verschließen, und Dichtungen (73), die den obersten und den untersten Teillichtwellenleiter (5R, 5B) gegen die Umwelt gasdicht verschließen, und dass die Zwischenräume (74) zwischen den Teillichtwellenleitern (5R, 5G, 5B) mit einem trockenen Schutzgas (SG) gefüllt sind, das unter Überdruck steht.

2. Lichtwellenleiter (5) gemäß Anspruch 1, wobei die Teillichtwellenleiter (5R, 5G, 5B) jeweils zumindest ein Hologramm aufweisen, wobei in unterschiedlichen Teillichtwellenleitern (5R, 5G, 5B) befindliche Hologramme (52R, 52G, 52B) in ihrer räumlichen Anordnung zueinander ausgerichtet sind.

3. Lichtwellenleiter (5) gemäß Anspruch 1 oder 2, wobei das Schutzgas (SG) für die unterschiedlichen Wellenlängen Brechungsindices aufweist, die sich von den Brechungsindices der Teillichtwellenleiter (5R, 5G, 5B) für die jeweiligen Wellenlängen unterscheiden.

4. Lichtwellenleiter (5) gemäß einem der vorherigen Ansprüche, wobei das Schutzgas (SG) eines aus der Liste Argon, Xenon und Stickstoff ist.

5. Gerät zum Generieren eines virtuellen Bildes (VB), mit:
- einer bildgebenden Einheit (1) zum Erzeugen eines Bildes; und
- einem Lichtwellenleiter (5) gemäß einem der Ansprüche 1 bis 4 zum Aufweiten einer Austrittspupille.

6. Fortbewegungsmittel mit einem Gerät gemäß Anspruch 5 zum Generieren eines virtuellen Bildes (VB) für einen Bediener des Fortbewegungsmittels.

## Claims

1. An optical waveguide (5) with two or more planar partial optical waveguides (5R, 5G, 5B) adapted to different wavelengths, which partial optical waveguides are fastened to one another by means of a fastening element (71) and arranged parallel to one another and at a distance from one another, **characterised in that** the fastening element (71) has seals (72) that lie in each case between a pair of partial optical waveguides (5R, 5G, 5B) and support the partial optical waveguides (5R, 5G, 5B) and close these partial optical waveguides (5R, 5G, 5B) from one another in gas-tight fashion at the edge of their parallel boundary surfaces (502R, 501G, 502G, 501B), and seals (73) which close the uppermost and the lowermost partial optical waveguide (5R, 5B) in gas-tight fashion with respect to the environment,
and **in that** the intermediate spaces (74) between the partial optical waveguides (5R, 5G, 5B) are filled with a dry protective gas (SG) which is under positive pressure.

2. The optical waveguide (5) according to claim 1, wherein the partial optical waveguides (5R, 5G, 5B) each have at least one holograph, wherein holographs (52R, 52G, 52B) located in different partial optical waveguides (5R, 5G, 5B) are aligned in their spatial arrangement with respect to one another.

3. The optical waveguide (5) according to claim 1 or 2, wherein the protective gas (SG) has refractive indices for the different wavelengths, which differ from the refractive indices of the partial optical waveguides (5R, 5G, 5B) for the respective wavelengths.

4. The optical waveguide (5) according to any one of the preceding claims, wherein the protective gas (SG) is one selected from the list comprising argon, xenon and nitrogen.

5. A device for generating a virtual image (VB), having:
- an image-generating unit (1) for producing an image; and
- an optical waveguide (5) according to any one of claims 1 to 4 for expanding an exit pupil.

6. A means of transport with a device according to claim 5 for generating a virtual image (VB) for an operator of the means of transport.

## Revendications

1. Guide d'ondes optique (5) comportant deux guides d'ondes optiques partiels plans (5R, 5G, 5B) ou plus, adaptés à différentes longueurs d'onde, fixés les uns aux autres par un élément de fixation (71) et disposés parallèlement et à distance les uns des autres, **caractérisé en ce que** l'élément de fixation (71) présente des joints (72) situés entre chaque paire de guides d'ondes optiques partiels (5R, 5G, 5B) et supportant les guides d'ondes optiques partiels (5R, 5G, 5B) et assurant l'étanchéité au gaz de ces guides d'ondes optiques partiels (5R, 5G, 5B) au niveau des bords de leurs surfaces de délimitation parallèles (502R, 501G, 502G, 501B), ainsi que des joints (73) assurant l'étanchéité au gaz des guides d'ondes optiques partiels supérieur et inférieur (5R, 5B) vis-à-vis de l'environnement,
et **en ce que** les espaces (74) entre les guides d'ondes optiques partiels (5R, 5G, 5B) sont remplis d'un gaz protecteur sec (SG) qui est sous surpression.

2. Guide d'ondes optique (5) selon la revendication 1, dans lequel les guides d'ondes optiques partiels (5R, 5G, 5B) présentent chacun au moins un hologramme, dans lequel les hologrammes (52R, 52G, 52B) situés dans différents guides d'ondes optiques partiels (5R, 5G, 5B) sont alignés les uns avec les autres dans leur disposition spatiale.

3. Guide d'ondes optique (5) selon la revendication 1 ou 2, dans lequel le gaz protecteur (SG) présente des indices de réfraction pour les différentes longueurs d'onde qui diffèrent des indices de réfraction des guides d'ondes optiques partiels (5R, 5G, 5B) pour les longueurs d'onde respectives.

4. Guide d'ondes optique (5) selon l'une quelconque des revendications précédentes, dans lequel le gaz protecteur (SG) est l'un de la liste comprenant l'argon, le xénon et l'azote.

5. Dispositif de génération d'une image virtuelle (VB), comportant :
- une unité d'imagerie (1) pour générer une image ; et
- un guide d'ondes optique (5) selon l'une quelconque des revendications 1 à 4 pour élargir une pupille de sortie.

6. Moyen de transport comportant un dispositif selon la revendication 5 pour générer une image virtuelle (VB) pour un opérateur du moyen de transport.
